# EUROPÄISCHE PATENTSCHRIFT

(11) **EP 2 695 768 B1**
(45) Veröffentlichungstag und Bekanntmachung des Hinweises auf die Patenterteilung: **17.12.2014**
(21) Anmeldenummer: 13178109.8
(22) Anmeldetag: 26.07.2013
(51) Int. Cl.: B60M 1/30

(54) **Vorrichtung zur Fixierung von Schienen**
Device for fixing rails
Dispositif de fixation de rails

(30) Priorität: 09.08.2012 DE 202012102995 U
(43) Veröffentlichungstag der Anmeldung: 12.02.2014
(73) Patentinhaber: REHAU AG + Co, 95111 Rehau (DE)
(72) Erfinder: Meinel, Udo, 95111 Rehau (DE); Meschinsky, Manuel, 78052 Villingen (DE)

(56) Entgegenhaltungen:
- DE-A1- 19 631 994
- DE-U1- 8 806 387
- DE-U1-202007 007 685
- FR-A- 397 736
- FR-A- 706 543
- FR-A1- 2 175 670
- US-A- 1 454 296
- US-A- 2 035 445

## Beschreibung

Die Erfindung betrifft eine Vorrichtung zur Fixierung von Schienen, insbesondere von Stromschienen für elektrisch betriebene Bahnen, welche über Befestigungssysteme an Trägerelementen angeordnet sind, umfassend wenigstens zwei den Fuß einer Schiene wenigstens teilweise umgreifenden, über wenigstens ein Spannelement miteinander verbundenen Klemmbacken, die jeweils zwei einander gegenüberliegend angeordnete Klemmelemente aufweisen.

Elektrisch betriebene Bahnen wie beispielsweise U- oder S-Bahnen sind schienengebundene Fahrzeuge, deren Stromversorgung über eine oberflächennahe Stromschiene erfolgt, die parallel zum Fahrweg bzw. den Schienen an Trägerelementen verlegt ist. Zum Zweck der Stromentnahme besitzen diese elektrisch betriebenen Bahnen sogenannte Stromabnehmer mit einem Schleifschuh, welcher beispielsweise von unten, von oben oder von der Seite an diese Stromschiene angedrückt wird und so den Strom von der Stromschiene zur elektrisch betriebenen Bahn überträgt.

Ein für Schienen, insbesondere Stromschienen, sehr nachteiliger Effekt ist das sogenannte Schienenwandern. Dieses ist insbesondere bei starken Temperaturänderungen in Folge der thermischen Ausdehnung bzw. Schwindung der hauptsächlich aus Metall hergestellten Schienen zu verzeichnen.

Aus dem Stand der Technik ist zur Lösung dieses Nachteiles bekannt, sogenannte Fair-Klemmen zu verwenden, die etwa U-förmig ausgebildet sind und aus hochwertigem federnden Stahl bestehen. Diese Klemmen umgreifen mit ihrem einen hakenförmig umgebogenen Schenkel die eine Schienenfußkante und erstrecken sich unterhalb des Schienenfußes als Anschlag gegenüber der Schwelle.
Nachteilig bei diesen sogenannten Wanderschutzklemmen ist, dass die Anordnung nur eines einzigen und zudem noch federnden Bügels am Schienenfuß keine ausreichende Gewähr gegen einen zuverlässigen Wanderschutz bietet und infolge dessen eine entsprechend große Anzahl derartiger Wanderschutzklemmen in verhältnismäßig geringen Längsabständen an der Schiene vorgesehen werden muss.
Ein weiterer Nachteil dieser Wanderschutzklemmen besteht darin, dass diese nur einmalig verwendbar und danach verworfen werden müssen, da ihre Klemmkraft nach dem Lösen nicht mehr ausreicht, was die Kosten derartiger Wanderschutzklemmen in erhebliche Höhen treibt.

Eine weitere Vorrichtung zur Fixierung von Schienen ist beispielsweise in der DE 1242253 beschrieben. Diese Wanderschutzklemme besteht aus einem Winkelstück, das in Einbaustellung mit seinem waagerechten Schenkel an der Unterseite des Schienenfußes und mit seinem lotrechten Schenkel an einer Gleisschwelle anliegt und bei dem die etwa in Schienenlängsrichtung verlaufenden beiden Kanten des waagerechten Schenkels nach unten abgebogen und gegenüber den Außenkanten des Schienenfußes sowohl in waagerechter Ebene symmetrisch zueinander als auch in lotrechter Ebene nach dem Scheitel des Winkelstücks hin auf Anzug gestellt sind und jede dieser beiden räumlich Doppelkeil-förmigen Abbiegungen von einer im Querschnitt etwa C-förmigen Spannklammer umfasst werden, deren untere Anlageflächen in Längsrichtung einen entsprechenden keilförmigen Anzug aufweisen und die um die jeweilige Schienenfußkante herum bis auf die Oberseite des Schienenfußes greift.
Diese Wanderschutzklemme zeichnet sich dadurch aus, dass sie in Bezug auf ihre Mittelachse derart symmetrisch ausgebildet ist, dass die mittleren Anlageflächen der einen Klammerhälfte gegenüber denen der anderen Klammerhälfte einen gegenläufigen Anzug haben, und zwar dergestalt, dass sich die Öffnungsweite der Spannklammer von ihrer Längsmitte aus nach beiden Enden hin vergrößert.
Derartige Wanderschutzklemmen sind nicht nur teuer in der Herstellung, sie haben auch den Nachteil, dass sie durch die spezielle Geometrie der Verspannung für an Fahrwegen verlegte Stromschienen für elektrisch betriebene Bahnen nicht verwendet werden können.

Die Erfindung hat sich daher die Aufgabe gestellt, die bekannten Nachteile des Standes der Technik zu überwinden und eine Vorrichtung aufzuzeigen, die kostengünstig und wirtschaftlich herstellbar ist, deren Geometrie so ausgebildet ist, dass sie an Schienen einfach sowie sicher montierbar ist und die gewährleistet, Kräfte in Längsrichtung der Schiene aufzunehmen, ohne eine Wanderbewegung der Schiene oder eine Beeinflussung des Befestigungssystems zu bewirken.

Die FR 397736 A beschreibt eine Vorrichtung zur Fixierung von Schienen, insbesondere von Stromschienen für elektrisch betriebene Bahnen, welche über Befestigungssysteme an Trägerelementen angeordnet sind, umfassend wenigstens zwei den Fuß einer Schiene umgreifende, miteinander verbundene Klemmbacken, die jeweils zwei übereinander, aneinander anliegend angeordnete Klemmelemente aufweisen, wobei die Stirnseite der ersten Klemmbacke über die zweite Klemmbacke hinwegragt.
Die zweite Klemmbacke ist so ausgebildet, dass sie teilweise über der ersten Klemmbacke hinweg am Träger befestigt ist, während ein unterer Teil der zweiten Klemmbacke an der ersten Klemmbacke wenigstens teilweise anliegt. Die zweite Klemmbacke weist dabei ein von seiner Stirnseite wegragendes Klemmmittel auf.

Erfindungsgemäß wird diese Aufgabe durch die Merkmale des Anspruches 1 gelöst. Weitere vorteilhafte Ausgestaltungen sind in den Unteransprüchen beschrieben.

Durch diese Ausgestaltung kann die Vorrichtung bei der Montage von Schienen, insbesondere von Stromschienen, sehr schnell und sicher montiert bzw. fixiert werden, so dass insbesondere in Längsrichtung der Schienen wirkende Kräfte durch die an einem Fuß der Schiene angeordneten Klemmbacken aufgenommen und durch direkte Kontaktierung zu dem Befestigungssystem sowie dem daran angeordneten Trägerelement an den Boden bzw. auf eine Bodenschwelle ableitbar sind. Die erfindungsgemäße Vorrichtung zur Fixierung von Schienen, insbesondere von Stromschienen, welche extrem kostengünstig herstellbar und sicher sowie einfach montierbar ist, führt somit dazu, dass bei bestimmungsgemäßer Verwendung der Stromschienen durch die elektrisch betriebenen Bahnen die Schienen, insbesondere die Stromschienen, in den Befestigungssystemen sicher fixiert sind, da diese sich nicht lockern können bzw. auch nicht durch extreme Beanspruchungen zerstört werden können.

Es hat sich dabei als vorteilhaft herausgestellt, dass das Klemmmittel einstückig mit der Stirnseite des Klemmelements verbunden ist. Hierdurch wird neben einer kostengünstigen Herstellung auch erreicht, dass die mechanischen Eigenschaften der das Klemmelement aufweisenden Klemmbacke sehr vorteilhaft sind, so dass ein dauerhafter Einsatz zur Fixierung von Schienen, insbesondere von Stromschienen, problemlos möglich ist.

Es hat sich weiterhin auch als vorteilhaft herausgestellt, dass das Klemmmittel stoffschlüssig und / oder kraftschlüssig und / oder formschlüssig mit der Stirnseite des Klemmelements verbunden ist. In dieser vorteilhaften Ausgestaltung der Vorrichtung zur Fixierung von Schienen, insbesondere von Stromschienen, ist es möglich, auch bereits bestehende Klemmbacken an derartigen Schienensystemen nachträglich so zu gestalten, dass dieses Klemmmittel an dem erforderlichen Klemmelement der Klemmbacke anbringbar bzw. bei Verschleiß wieder entfernbar ist.

Ebenfalls vorteilhaft bei der erfindungsgemäßen Vorrichtung zur Fixierung von Schienen, insbesondere von Stromschienen, wird gesehen, dass die Fläche der Stirnseite des Klemmmittels etwa halb so groß ist wie die Stirnseite des Klemmelements. Hierdurch sind einerseits die Herstellungskosten sehr gering und andererseits lässt sich die erfindungsgemäße Vorrichtung zur Fixierung von Schienen, insbesondere von Stromschienen, sehr variabel für unterschiedlich dimensionierte Schienen zu deren Fixierung verwenden.

Eine weitere vorteilhafte Ausgestaltung der erfindungsgemäßen Vorrichtung zur Fixierung von Schienen, insbesondere von Stromschienen, zeichnet sich dadurch aus, dass das Klemmmittel etwa flächenbündig zu einer Außenseite des Klemmelements angeordnet ist. Durch diese optisch ansprechende Geometrie der erfindungsgemäßen Vorrichtung ist neben den geringen Herstellungskosten trotzdem gewährleistet, dass bei bestimmungsgemäßem Einsatz zur Fixierung von Schienen, insbesondere von Stromschienen, eine ausreichende Festigkeit bzw. Stabilität vorhanden ist.

Die erfindungsgemäße Vorrichtung zeichnet sich weiterhin dadurch aus, dass der Abstand der Stirnseite des Klemmmittels von der Stirnseite des Klemmelements etwa der Breite des Klemmmittels entspricht. Durch diese vorteilhafte Ausgestaltung der erfindungsgemäßen Vorrichtung ist es möglich, insbesondere verschieden dimensionierte Schienen mit unterschiedlichen Breiten bzw. Winkelstellungen des Schienenfußes über diese Vorrichtung zu fixieren, ohne dass zusätzliche Klemmbacken mit anderen Geometrien erforderlich sind.

Es hat sich weiterhin als vorteilhaft herausgestellt, dass bei der erfindungsgemäßen Vorrichtung die Stirnseite des Klemmelements und / oder die Stirnseite des Klemmmittels wenigstens eine Öffnung aufweist. Hierdurch ist sichergestellt, dass die erfindungsgemäße Vorrichtung zum Fixieren von Schienen, insbesondere von Stromschienen, mit jeweils einem Spannelement sicher fixierbar ist und dass durch verschiedene Positionierung der Klemmbacken zueinander auch Stromschienen unterschiedlicher Dimensionierungen einfach und sicher fixierbar sind.

Ein weiterer Vorteil der erfindungsgemäßen Vorrichtung besteht darin, dass die Länge der Außenseiten der Klemmelemente der Klemmbacke in etwa gleich lang ist. Diese vorteilhafte Ausgestaltung führt einerseits zu geringen Herstellungskosten und andererseits ist die Montage der Klemmbacken insbesondere bei verschieden dimensionierten Schienen, insbesondere Stromschienen, problemlos, schnell und sicher möglich.

Die erfindungsgemäße Vorrichtung ist weiterhin vorteilhaft so ausgebildet, dass die Klemmelemente einander in einem spitzen Winkel gegenüberliegend angeordnet sind, der in etwa 5° bis 50°, vorzugsweise 10° bis 30° beträgHierdurch ist es vorteilhafterweise möglich, die erfindungsgemäße Vorrichtung zur Fixierung von Schienen, insbesondere von Stromschienen, für verschieden breit, dick bzw. hoch dimensionierte Stromschienen einzusetzen, ohne dass unterschiedlich dimensionierte Klemmbacken verwendet werden müssen, was einerseits zu einer Materialeinsparung, andererseits aber auch zu geringen Lagerkosten führt.

Vorrichtung zur Fixierung von Schienen, insbesondere von Stromschienen, nahezu ausgeschlossen.

Vorteilhaft bei der erfindungsgemäßen Vorrichtung zur Fixierung von Schienen, insbesondere von Stromschienen, wird weiterhin gesehen, dass das Klemmelement und / oder das Klemmmittel der Klemmbacke wenigstens teilweise aus einem metallischen Werkstoff hergestellt ist. Durch diese vorteilhafte Ausgestaltung weist die Vorrichtung eine ausreichende Festigkeit insbesondere im Dauergebrauch zur Fixierung von Schienen, insbesondere von Stromschienen, auf und ist zusätzlich kostengünstig herstellbar.
Unter metallischen Werkstoffen werden hier insbesondere verstanden Legierungen, insbesondere Eisenlegierungen wie Stahl, Gusseisen, Edelstahl, sowie Nichteisenmetalle wie Kupfer, Aluminium, Zink. Weiterhin umfasst sind metallische Werkstoffe aus Nichteisenlegierungen wie Messing, Bronze.

Ebenfalls vorteilhaft bei der erfindungsgemäßen Vorrichtung ist, dass das Klemmelement und / oder das Klemmmittel der Klemmbacke wenigstens teilweise aus einem polymeren Werkstoff hergestellt ist. In dieser vorteilhaften Ausgestaltung der erfindungsgemäßen Vorrichtung zur Fixierung von Schienen, insbesondere von Stromschienen, ist diese korrosionsbeständig und weist im Vergleich zu metallischen Vorrichtungen ein geringeres Gewicht auf. Unter polymerem Werkstoff sind Materialien gemeint, wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol PPY);Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien.
Dabei können dem polymeren Werkstoff des Profilelementes geeignete Füll- und / oder Verstärkungsstoffe beigemischt sein, die die mechanischen Eigenschaften positiv beeinflussen insbesondere Glasfasern, Glaskugeln aber auch Füllstoffe wie Kreide, Teflon und dergleichen. Die Füll- und / oder Verstärkungsstoffe sind dabei in Mengen von etwa 5 bis 50 Gew.-%, vorzugsweise 10 bis 35 Gew.-%, bezogen auf die Gesamtmasse, enthalten.

Die Erfindung soll nun an diesen nicht einschränkenden Ausführungsbeispielen näher beschrieben werden.

Es zeigen:
- Fig. 1: perspektivische Darstellung einer erfindungsgemäßen Vorrichtung zur Fixierung von Schienen, insbesondere von Stromschienen mit einem Befestigungssystem sowie einem Trägerelement
- Fig. 2: perspektivische Darstellung einer weiteren erfindungsgemäßen Vorrichtung zur Fixierung von Schienen, insbesondere von Stromschienen mit einem Befestigungssystem
- Fig. 3: perspektivische Darstellung einer Klemmbacke
- Fig. 4: perspektivische Darstellung einer weiteren Klemmbacke.
- Fig. 5: perspektivische Darstellung einer weiteren Klemmbacke.

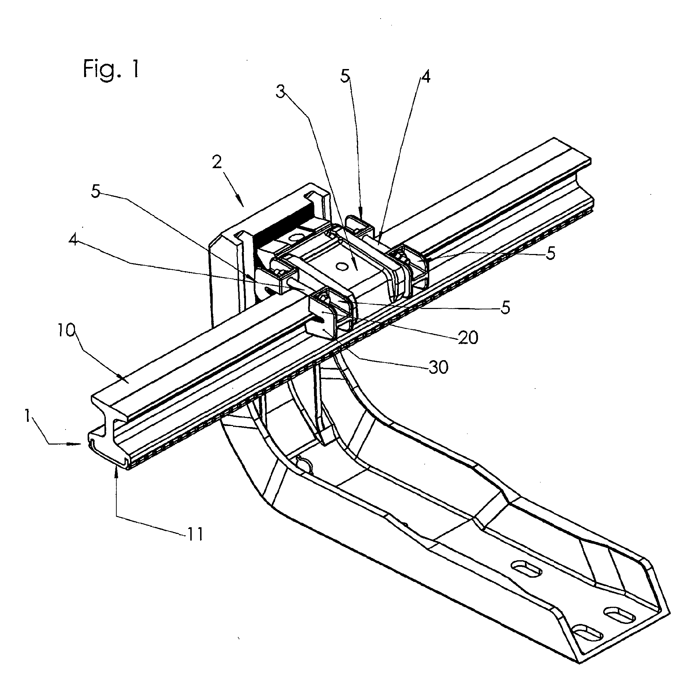

In der Fig. 1 ist eine perspektivische Darstellung einer erfindungsgemäßen Vorrichtung zur Fixierung von Schienen 1, insbesondere von Stromschienen, mit einem Befestigungssystem 3 sowie einem Trägerelement 2 abgebildet.
Das Trägerelement 2 ist mit seinem der Schiene 1 gegenüberliegenden freien Ende entweder im Boden oder auf der Schiene fixiert, so dass über das am Trägerelement 2 angeordnete Befestigungssystem 3 die Schiene 1 positioniert und fixiert ist.
Die Schienen 1 für elektrisch betriebene Bahnen, wie beispielsweise U- oder S-Bahnen, sind über viele Kilometer Länge parallel zum Fahrweg bzw. den Schienen verlegt, so dass je nach Distanz sehr viele Trägerelemente 2 mit den daran angeordneten Befestigungssystemen 3 verbaut sind.
Um die sogenannten Wanderbewegungen der Schienen 1 zu reduzieren bzw. auszuschließen, sind jeweils neben den Befestigungssystemen 3 die erfindungsgemäßen Vorrichtungen zur Fixierung von Schienen 1, insbesondere von Stromschienen, positioniert.
Die Vorrichtung umfasst dabei wenigstens zwei den Fuß 10 der Schiene 1 wenigstens teilweise umgreifende, über wenigstens ein Spannelement 4 miteinander verbundene Klemmbacken 5, die jeweils zwei einander in einem Winkel gegenüberliegend angeordnete Klemmelemente 30, 20 aufweisen.
Vorteilhafterweise sind jeweils zwei voneinander über das Befestigungssystem 3 voneinander beabstandet angeordnete erfindungsgemäße Vorrichtungen zur Fixierung der Schiene 1 angeordnet.
In diesem Ausführungsbeispiel ist die Schiene 1 so im Befestigungssystem 3 angeordnet, dass ein nicht dargestellter Stromabnehmer einer elektrisch betriebenen Bahn den Strom von unten an der dem Befestigungssystem 3 gegenüberliegenden Kopf 11 der Schiene 1 abgreift.
Die erfindungsgemäße Vorrichtung ist in diesem Ausführungsbeispiel am Fuß 10 der Schiene 1 positioniert und über das zwischen den Klemmbacken 5 angeordnete Spannelement 4 kraftschlüssig fixiert.
In diesem Ausführungsbeispiel sind die den Fuß 10 der Schiene 1 umgreifenden Klemmbacken 5, die zwei einander in einem etwa spitzen Winkel von 15° gegenüberliegende Klemmelemente 30, 20 aufweisen, voneinander beabstandet über das Spannelement 4 in Wirkverbindung stehend miteinander verbunden.

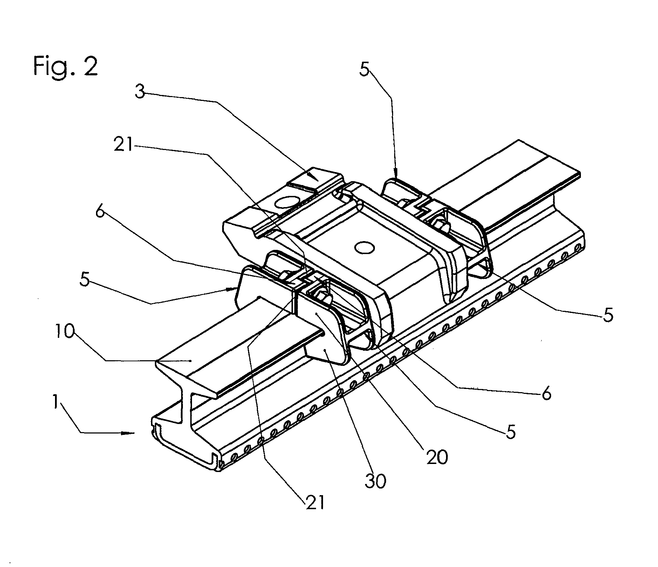

In der Fig. 2 ist eine perspektivische Darstellung einer weiteren erfindungsgemäßen Vorrichtung zur Fixierung von Schienen 1, insbesondere von Stromschienen, mit einem Befestigungssystem 3 dargestellt.
In diesem Ausführungsbeispiel weist die Schiene 1 eine Geometrie auf, die so ausgestaltet ist, dass der Fuß 10 der Schiene 1 eine Breite aufweist, die geringer ist als die Schiene 1 in der Fig. 1, so dass die zwei den Fuß 10 der Schiene 1 umgreifenden, über das Spannelement 4 miteinander verbundenen Klemmbacken 5 direkt mit ihren Stirnseiten 21 aneinander liegend angeordnet sind.
Die zwei in einem spitzen Winkel von etwa 20° gegerüberliegend angeordneten Klemmelemente 30, 20 der Klemmbacke 5 weisen jeweils an ihren gegenüberliegend angeordneten Stirnseiten 21 jeweils ein Klemmmittel 6 auf. Dieses Klemmmittel 6 ist in diesem Ausführungsbeispiel einstückig mit der Stirnseite 21 des Klemmelements 20 der Klemmbacke 5 verbunden.
Die erfindungsgemäße Vorrichtung zur Fixierung von Schienen 1, insbesondere von Stromschienen, ist somit über die Anordnung der den Fuß 10 der Schiene 1 umgreifenden über ein Spannelement 4 miteinander verbundenen Klemmbacken 5 so variabel einsetzbar, dass unterschiedliche Dimensionen sowohl des Fußes 10 als auch der Schiene 1 selbst einfach, kostengünstig und sicher fixierbar sind.
Es liegt jedoch auch im Rahmen der Erfindung, dass zwischen den sich gegenüberliegenden Stirnseiten 21 des Klemmelements 20 der Klemmbacke 5 nicht dargestellte Distanzelemente positioniert sind.

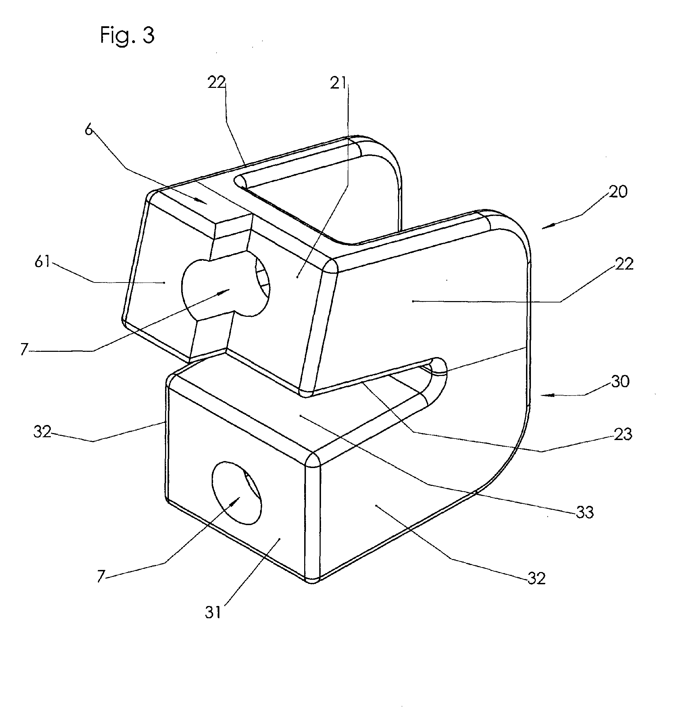

In der Fig. 3 ist die perspektivische Darstellung einer Klemmbacke 5 der erfindungsgemäßen Vorrichtung zur Fixierung von Schienen 1, insbesondere von Stromschienen für elektrisch betriebene Bahnen, dargestellt.
Die Klemmbacke 5 weist zwei einander gegenüberliegend angeordnete Klemmelemente 30, 20 auf, wobei das Klemmelement 20 ein von seiner Stirnseite 21 wegragendes Klemmmittel 6 aufweist.
Das Klemmmittel 6 ist in diesem Ausführungsbeispiel stoffschlüssig durch an sich bekanntes Verschweißen mit der Stirnseite 21 des Klemmelements 20 verbunden.
Die Fläche der Stirnseite 61 des Klemmmittels 6 ist in diesem Ausführungsbeispiel etwa halb so groß wie die Fläche der Stirnseite 21 des Klemmelements 20.
In diesem Ausführungsbeispiel weist das Klemmelement 30 eine ebene Stirnseite 31 auf, an der kein Klemmmittel angeordnet ist.

Es liegt jedoch auch im Rahmen der Erfindung, dass an der Stirnseite 31 des Klemmelements 30 ebenfalls ein Klemmmittel angeordnet ist.

Der Abstand der Stirnseite 61 des Klemmmittels 6 von der Stirnseite 21 des Klemmelements 20 der Klemmbacke 5 entspricht in diesem Ausführungsbeispiel in etwa einem Drittel der Breite des Klemmelements 20, wobei das Klemmmittel 6 etwa flächenbündig zur Außenseite 22 des Klemmelements 20 angeordnet ist.
Die Stirnseiten 31, 21 des Klemmelements 30, 20 weisen in diesem Ausführungsbeispiel jeweils eine Öffnung 7 auf, die zentriert angeordnet ist.
Die Öffnung 7 der Stirnseite 21 des Klemmelements 20 setzt sich zusätzlich noch halb in dem Klemmmittel 6 fort, so dass die erfindungsgemäße Vorrichtung zur Fixierung von Schienen 1, insbesondere von Stromschienen, durch zwei den nicht dargestellten Fuß 10 einer Schiene 1 umgreifenden, über ein durch die Öffnung 7 einbringbares Spannelement 4, welche hier nicht dargestellt sind, miteinander verbunden sind.
Die Länge der Außenseiten 32, 22 der Klemmelemente 30, 20 der Klemmbacke 5 sind in diesem Ausführungsbeispiel etwa gleich lang.
Der Winkel zwischen den einander gegenüberliegend angeordneten Klemmelementen 30, 20 beträgt in diesem Ausführungsbeispiel etwa 14°.
Weiterhin sind die Klemmelemente 30, 20 der Klemmbacke 5 in diesem Ausführungsbeispiel im Querschnitt gesehen etwa U-förmig ausgebildet, was zu sehr guten Festigkeitswerten der Klemmbacke 5 führt.
Es liegt jedoch auch im Rahmen der Erfindung, dass die Klemmelemente 30, 20 im Querschnitt eine C-förmige, T-förmige, Doppel-T-förmige und dergleichen Geometrie aufweisen. Das an der Stirnseite 21 des Klemmelements 20 angeordnete Klemmmittel 6 ist in diesem Ausführungsbeispiel massiv aus Metall, in diesem Fall aus Stahl hergestellt.

Die Klemmelemente 30, 20 der Klemmbacke 5 sind ebenfalls aus Stahl hergestellt und über eine an sich bekannte Verschweißung stoffschlüssig mit dem Klemmmittel 6 verbunden.
Die Innenseiten 33, 23 der Klemmelemente 30, 20 sind in diesem Ausführungsbeispiel glattflächig ausgeführt.
Das Klemmmittel 6, welches in diesem Ausführungsbeispiel flächenbündig zur Außenseite 22 des Klemmelements 20 angeordnet ist und im Querschnitt etwa prismatisch ausgebildet ist, kann jedoch auch an der gegenüberliegenden Außenseite 22 des Klemmelements 20 angeordnet sein.

Es liegt auch im Rahmen der Erfindung, dass das Klemmelement 6 flächenbündig zur Innenseite 23, 33 des Klemmelements 30, 20 angeordnet ist.
Das Klemmelement 30 ist in diesem Ausführungsbeispiel einstückig mit dem Klemmelement 20 der Klemmbacke 5 verbunden.

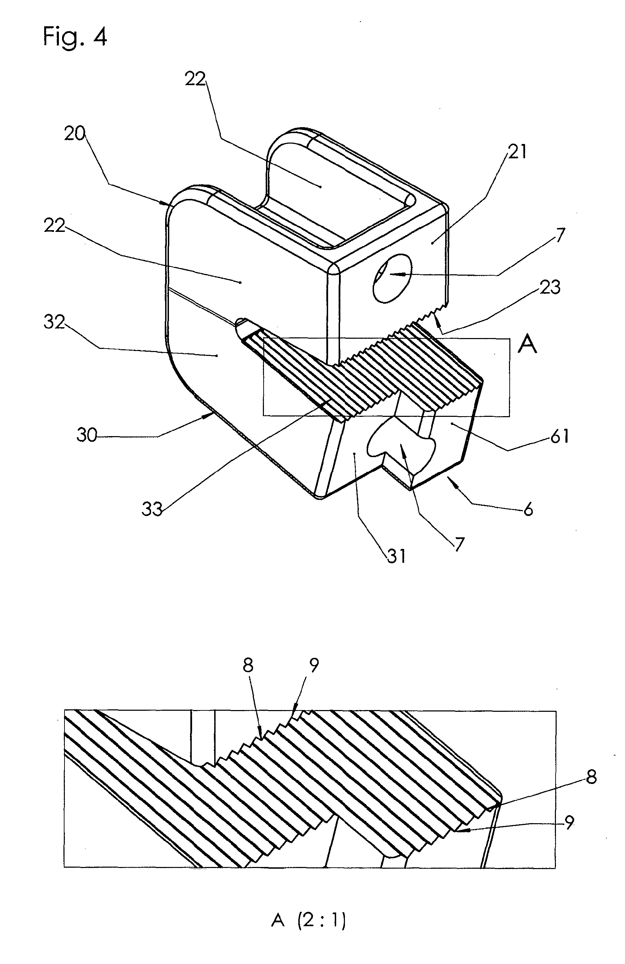

In der Fig. 4 ist eine perspektivische Darstellung einer weiteren Klemmbacke 5 der erfindungsgemäßen Vorrichtung zur Fixierung von Schienen 1, insbesondere von Stromschienen für elektrisch betriebene Bahnen, dargestellt.
In diesem Ausführungsbeispiel ist das Klemmelement 20 stoffschlüssig mit dem Klemmelement 30 der Klemmbacke 5 verbunden.
An der Stirnseite 31 des Klemmelements 30 ist in diesem Ausführungsbeispiel das Klemmmittel 6 einstückig angeordnet.
Das Klemmmittel 6 ist in diesem Ausführungsbeispiel etwa flächenbündig zur Außenseite 33 des Klemmelements 30 angeordnet.
Die Stirnseite 31, 21 des Klemmelements 30, 20 und die Stirnseite 61 des Klemmmittels 6 weisen jeweils eine Öffnung 7 auf, durch die bei bestimmungsgemäßer Verwendung das nicht dargestellte Spannelement 4 einbringbar ist.
Die Innenseiten 33, 23 der Klemmelemente 30, 20 der Klemmbacke 5 sind in diesem Ausführungsbeispiel in einem spitzen Winkel von etwa 25°angeordnet.

Weiterhin weisen die Innenseiten 33, 23 der Klemmelemente 30, 20 der Klemmbacke 5 in diesem Ausführungsbeispiel orthogonal zu ihrer Stirnseite 31, 21 angeordnete Erhöhungen 8 bzw. Vertiefungen 9 auf.
In diesem Ausführungsbeispiel sind die Erhöhungen 8 bzw. die Vertiefungen 9 im Querschnitt etwa dreieckförmig ausgebildet und so angeordnet, dass die kompletten Innenseiten 33, 23 der Klemmelemente 30, 20 etwa parallel zur Außenseite 32, 22 damit versehen sind.

Die Erhöhungen 8 bzw. der Vertiefungen 9 ist im Ausschnitt A nochmals im Maßstab 2:1 detailliert dargestellt. Die etwa äquidistant zueinander angeordneten Erhöhungen 8 bzw. Vertiefungen 9 weisen im Querschnitt eine dreieckförmige Gestalt auf und sind etwa parallel zur Außenseite 22, 32 der Klemmbacke 5 angeordnet.

In diesem Ausführungsbeispiel weist auch das Klemmelement 6 derartige Erhöhungen 8 bzw. Vertiefungen 9 auf, welche an der Innenseite 33 des Klemmelements 30 der Klemmbacke 5 angeordnet sind.

Durch diese vorteilhafte Ausgestaltung der Erhöhungen 8 bzw. der Vertiefungen 9 lässt sich die Vorrichtung zur Fixierung von Schienen 1, insbesondere von Stromschienen für elektrisch betriebene Bahnen, besonders sicher auf den hier nicht dargestellten Fuß 10 einer Schiene 1 umgreifend aufbringen und formschlüssig an diesem über nicht dargestellte Spannelemente 4 fixieren.

Die Klemmelemente 30, 20 der Klemmbacke 5 sind in diesem Ausführungsbeispiel aus einem polymeren Werkstoff hergestellt, nämlich aus Polyamid und weisen Verstärkungsstoffe in einer Menge von etwa 35 Gew.-% Glasfasern, bezogen auf die Gesamtmasse, auf.

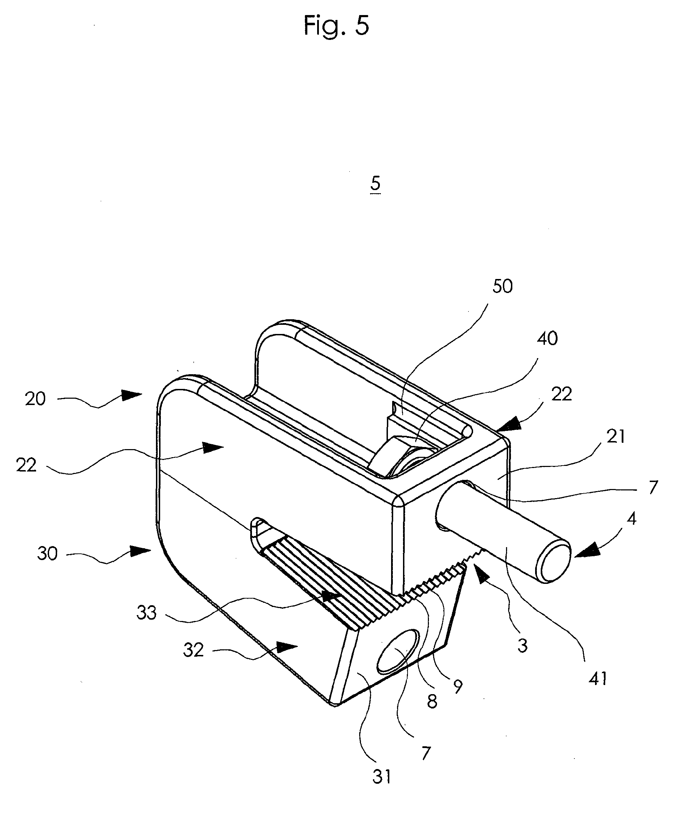

In der Fig. 5 ist eine perspektivische Darstellung einer weiteren Klemmbacke 5 der erfindungsgemäßen Vorrichtung zur Fixierung von Schienen 1, insbesondere von Stromschienen für elektrisch betriebene Bahnen, dargestellt.
Die Klemmbacke 5 weist ein Klemmelement 20 sowie ein mit diesem stoffschlüssig verbundenes Klemmelement 30 auf. Die Innenseiten 33, 23 der Klemmelemente 30, 20 der Klemmbacke 5 sind in diesem Ausführungsbeispiel in einem spitzen Winkel von etwa 15° angeordnet und weisen orthogonal zu ihrer Stirnseite 31, 21 angeordnete parallel nebeneinander verlaufende Erhöhungen 8 bzw. Vertiefungen 9 auf.
Die Erhöhungen 8 bzw. Vertiefungen 9 sind in diesem Ausführungsbeispiel im Querschnitt etwa dreieckförmig ausgebildet und so angeordnet, dass sie die kompletten Innenseiten 33, 23 der Klemmelemente 30, 20 der Klemmbacke 5 etwa parallel zueinander und zur Außenseite 32, 22 damit versehen sind.

In den Stirnseiten 31, 21 des Klemmelements 30, 20 ist jeweils eine Öffnung 7 angeordnet, durch die ein Spannelement 4 so einbringbar ist, dass dadurch eine weitere gegenüberliegend angeordnete, nicht dargestellte, Klemmbacke 5 kraftschlüssig fixierbar ist.
Das Spannelement 4 ist dabei als an sich bekannte Sechskantschraube ausgebildet, mit einem Schraubenkopf 40 und einem am Schraubenschaft 41 angeordneten Gewinde.

Die Klemmbacke 5 ist in diesem Ausführungsbeispiel so ausgebildet, dass an der der Außenseite 22 des Klemmelements 20 gegenüberliegenden Seite benachbart zur Stirnseite 21 ein Fixierelement 50 angeordnet ist.

Das Fixierelement 50 ist in diesem Ausführungsbeispiel stoffschlüssig an der der Außenseite 22 gegenüberliegend angeordneten Seite des Klemmelements 20 angeordnet.
Das Fixierelement 50 ist dabei so dimensioniert, dass es einen Spalt zwischen der der Außenseite 22 gegenüberliegend angeordneten Seite des Klemmelements 20 und dem Schraubenkopf 40 des Spannelementes 4 verschließt. Das Fixierelement 50 steht somit mit wenigstens einer Fläche des Schraubenkopfs 40 des Spannelementes 4 in Wirkverbindung.
Es liegt jedoch auch im Rahmen der Erfindung, dass das Klemmelement 20 an allen beiden der Außenseite 22 gegenüberliegend angeordneten Seite jeweils ein Fixierelement 50 aufweist, die so einander gegenüberliegend angeordnet sind, dass sie mit je einer Fläche des Schraubenkopfes 40 des Spannelements 4 in Wirkverbindung stehen.

Das Fixierelement 50 ist vorteilhafterweise so ausgebildet, dass es das im Klemmelement 20 angeordnete Spannelement 4 verdrehsicher fixiert. Dies wird dadurch erreicht, dass jeweils eine einer Fläche des Schraubenkopfes 40 des Spannelements 4 gegenüberliegende Seite des Fixierelements 50 mit dieser in Wirkverbindung steht.

Es liegt weiterhin im Rahmen der Erfindung, dass die Klemmbacke 5 sowohl im Klemmelement 20 als auch auf der der Außenseite 32 des Klemmelements 30 gegenüberliegenden Seite jeweils mindestens ein Fixierelement 50 aufweist.
Das Fixierelement 50 ist dabei so an der der Außenseite 22, 32 des Klemmelements 30, 20 angeordnet, dass es mit seiner schmalen Stirnseite direkt an der der Stirnseite 21, 31 des Klemmelements 30, 20 gegenüberliegenden Seite angeordnet ist.

Das Fixierelement 50 kann dabei sowohl einstückig, als auch stoffschlüssig und / oder kraftschlüssig an der der Außenseite 22, 32 des Klemmelements 30, 20 gegenüberliegenden Seite angeordnet sein.

Durch die erfindungsgemäße Vorrichtung zur Fixierung von Schienen 1, insbesondere Stromschienen für elektrisch betriebene Bahnen, welche über Befestigungssysteme 3 an Trägerelementen 2 angeordnet sind, umfassend wenigstens zwei den Fuß 10 einer Schiene 1 wenigstens teilweise umgreifende, über wenigstens ein Spannelement 4 miteinander verbundene Klemmbacken 5, die jeweils zwei einander gegenüberliegend angeordnete Klemmelemente 30, 20 aufweisen, welche sich dadurch auszeichnen, dass wenigstens ein Klemmelemente 30, 20 ein von seiner Stirnseite 31, 21 wegragendes Klemmmittel 6 aufweist, ist es somit erstmals möglich, das sogenannte Schienenwandern einzudämmen bzw. zu verhindern, indem eine derart kostengünstig herstellbare und eine sichere Fixierung gewährleistende Vorrichtung zur Verfügung gestellt wird.

## Patentansprüche

1. Vorrichtung zur Fixierung von Schienen (1), insbesondere von Stromschienen für elektrisch betriebene Bahnen, welche über Befestigungssysteme (3) an Trägerelementen (2) angeordnet sind, umfassend wenigstens zwei den Fuß (10) einer Schiene (1) wenigstens teilweise umgreifende, über wenigstens ein Spannelement (4) miteinander verbundene Klemmbacken (5), die jeweils zwei einander gegenüberliegend angeordnete Klemmelemente (30, 20) aufweisen, dass wenigstens ein Klemmelement (30, 20) ein von seiner Stirnseite (31, 21) wegragendes Klemmmittel (6) aufweist, **dadurch gekennzeichnet, dass** die einander gegenüberliegenden Innenseiten (33, 23) der Klemmelemente (30, 20) wenigstens eine orthogonal zu ihrer Stirnseite (31, 21) angeordnete Erhöhung (8) bzw. Vertiefung (9) aufweisen.

2. Vorrichtung nach Anspruch 1, **dadurch gekennzeichnet, dass** die Erhöhung (8) bzw. die Vertiefung (9) der Innenseite (33, 23) des Klemmelements (30, 20) im Querschnitt etwa rund, oval, dreieckig, viereckig, prismatisch und dergleichen ausgebildet ist.

3. Vorrichtung nach einem der vorhergehenden Ansprüche, **dadurch gekennzeichnet, dass** das Klemmmittel (6) einstückig mit der Stirnseite (31, 21) des Klemmelements (30, 20) verbunden ist.

4. Vorrichtung nach einem der vorhergehenden Ansprüche, **dadurch gekennzeichnet, dass** das Klemmmittel (6) stoffschlüssig und/oder kraftschlüssig und / oder formschlüssig mit der Stirnseite (31, 21) des Klemmelements (30, 20) verbunden ist.

5. Vorrichtung nach einem der vorhergehenden Ansprüche, **dadurch gekennzeichnet, dass** die Fläche der Stirnseite (61) des Klemmmittels (6) etwa halb so groß ist, wie die Stirnseite (31, 21) des Klemmelements (30, 20).

6. Vorrichtung nach einem der vorhergehenden Ansprüche, **dadurch gekennzeichnet, dass** der Abstand der Stirnseite (61) des Klemmmittels (6) von der Stirnseite (31, 21) des Klemmelements (30, 20) in etwa der halben Breite des Klemmelements (30, 20) entspricht.

7. Vorrichtung nach einem der vorhergehenden Ansprüche, **dadurch gekennzeichnet, dass** das Klemmmittel (6) etwa flächenbündig zur Außenseite (32, 22) des Klemmelements (30, 20) angeordnet ist.

8. Vorrichtung nach einem der vorhergehenden Ansprüche, **dadurch gekennzeichnet, dass** der Abstand der Stirnseite (61) des Klemmmittels (6) von der Stirnseite (31, 21) des Klemmelements (30, 20) etwa der Breite des Klemmmittels (6) entspricht.

9. Vorrichtung nach einem der vorhergehenden Ansprüche, **dadurch gekennzeichnet, dass** die Stirnseite (31, 21) des Klemmelements (30, 20) und / oder die Stirnseite (61) des Klemmmittels (6) wenigstens eine Öffnung (7) aufweist.

10. Vorrichtung nach einem der vorhergehenden Ansprüche, **dadurch gekennzeichnet, dass** die Länge der Außenseiten (32, 22) der Klemmelemente (30, 20) der Klemmbacke (5) in etwa gleich sind.

11. Vorrichtung nach einem der vorhergehenden Ansprüche, **dadurch gekennzeichnet, dass** die Klemmelemente (30, 20) der Klemmbacke (5) einander in einem etwa spitzen Winkel gegenüberliegend angeordnet sind, der in etwa 5° bis 50°, vorzugsweise 10° bis 30° beträgt.

12. Vorrichtung nach einem der vorhergehenden Ansprüche, **dadurch gekennzeichnet, dass** das Klemmelement (30, 20) und/oder das Klemmmittel (6) der Klemmbacke (5) wenigstens teilweise aus einem metallischen und/oder polymeren Werkstoff hergestellt ist.

13. Vorrichtung nach einem der vorhergehenden Ansprüche, **dadurch gekennzeichnet, dass** an der der Außenseite (32, 22) des Klemmelements (30, 20) gegenüberliegenden Seite wenigstens ein Fixierelement (50) angeordnet ist.

## Claims

1. Device for fixing rails (1), in particular conductor rails for electrically operated tracks, which are arranged on carrier elements (2) via fastening systems (3), comprising at least two clamping jaws (5) which at least partially engage around the foot (10) of a rail (1), are connected to one another via at least one tensioning element (4) and each have two clamping elements (30, 20) located opposite one another, wherein at least one clamping element (30, 20) has a clamping means (6) projecting away from its end side (31, 21), **characterized in that** the mutually opposite inner sides (33, 23) of the clamping elements (30, 20) have at least one elevation (8) or depression (9) arranged orthogonally in relation to the end side (31, 21) thereof.

2. Device according to Claim 1, **characterized in that** the elevation (8) or the depression (9) on the inner side (33, 23) of the clamping element (30, 20) is designed to be approximately round, oval, triangular, quadrilateral, prismatic or the like in cross section.

3. Device according to one of the preceding claims, **characterized in that** the clamping means (6) is connected in one piece to the end side (31, 21) of the clamping element (30, 20).

4. Device according to one of the preceding claims, **characterized in that** the clamping means (6) is connected in an integrally locking and/or force fitting and/or form fitting manner to the end side (31, 21) of the clamping element (30, 20).

5. Device according to one of the preceding claims, **characterized in that** the surface area of the end side (61) of the clamping means (6) is approximately half the size of the end side (31, 21) of the clamping element (30, 20).

6. Device according to one of the preceding claims, **characterized in that** the distance between the end side (61) of the clamping means (6) and the end side (31, 21) of the clamping element (30, 20) corresponds approximately to half the width of the clamping element (30, 20).

7. Device according to one of the preceding claims, **characterized in that** the clamping means (6) is arranged in an approximately surface flush manner in relation to the outer side (32, 22) of the clamping element (30, 20).

8. Device according to one of the preceding claims, **characterized in that** the distance between the end side (61) of the clamping means (6) and the end side (31, 21) of the clamping element (30, 20) corresponds approximately to the width of the clamping means (6).

9. Device according to one of the preceding claims, **characterized in that** the end side (31, 21) of the clamping element (30, 20) and/or the end side (61) of the clamping means (6) have/has at least one opening (7).

10. Device according to one of the preceding claims, **characterized in that** the lengths of the outer sides (32, 22) of the clamping elements (30, 20) of the clamping jaw (5) are approximately equal.

11. Device according to one of the preceding claims, **characterized in that** the clamping elements (30, 20) of the clamping jaw (5) are located opposite one another at an approximately acute angle of approximately 5° to 50°, preferably 10° to 30°.

12. Device according to one of the preceding claims, **characterized in that** the clamping element (30, 20) and/or the clamping means (6) of the clamping jaw (5) are/is produced, at least in part, from a metallic material and/or a polymer material.

13. Device according to one of the preceding claims, **characterized in that** at least one fixing element (50) is arranged on the side located opposite the outer side (32, 22) of the clamping element (30, 20).

## Revendications

1. Dispositif pour la fixation de rails (1), en particulier de rails électriques pour des voies électrifiées, qui sont disposés sur des éléments de support (2) au moyen de systèmes de fixation (3), comprenant au moins deux mâchoires de pinçage (5) entourant au moins partiellement le pied (10) d'un rail (1) et reliées l'une à l'autre par au moins un élément de serrage (4), qui présentent respectivement deux éléments de pinçage (30, 20) disposés l'un en face de l'autre, dans lequel au moins un élément de pinçage (30, 20) présente un moyen de pinçage (6) saillant sur sa face frontale (31, 21), **caractérisé en ce que** les faces intérieures (33, 23) opposées l'une à l'autre des éléments de pinçage (30, 20) présentent au moins une surélévation (8) ou un creux (9) disposé(e) orthogonalement à leur face frontale (31, 21).

2. Dispositif selon la revendication 1, **caractérisé en ce que** la surélévation (8) ou le creux (9) de la face intérieure (33, 23) de l'élément de pinçage (30, 20) présente une section transversale de forme sensiblement ronde, ovale, triangulaire, carrée, prismatique et analogue.

3. Dispositif selon l'une quelconque des revendications précédentes, **caractérisé en ce que** le moyen de pinçage (6) est relié d'une seule pièce avec la face frontale (31, 21) de l'élément de pinçage (30, 20).

4. Dispositif selon l'une quelconque des revendications précédentes, **caractérisé en ce que** le moyen de pinçage (6) est relié par continuité de matière et/ou par adhérence et/ou par emboîtement à la face frontale (31, 21) de l'élément de pinçage (30, 20).

5. Dispositif selon l'une quelconque des revendications précédentes, **caractérisé en ce que** la surface de la face frontale (61) du moyen de pinçage (6) est environ deux fois plus petite que la face frontale (31, 21) de l'élément de pinçage (30, 20).

6. Dispositif selon l'une quelconque des revendications précédentes, **caractérisé en ce que** la distance entre la face frontale (61) du moyen de pinçage (6) et la face frontale (31, 21) de l'élément de pinçage (30, 20) correspond environ à la moitié de la largeur de l'élément de pinçage (30, 20).

7. Dispositif selon l'une quelconque des revendications précédentes, **caractérisé en ce que** le moyen de pinçage (6) est disposé sensiblement en alignement de surface avec la face extérieure (32, 22) de l'élément de pinçage (30, 20).

8. Dispositif selon l'une quelconque des revendications précédentes, **caractérisé en ce que** la distance entre la face frontale (61) du moyen de pinçage (6) et la face frontale (31, 21) de l'élément de pinçage (30, 20) correspond sensiblement à la largeur du moyen de pinçage (6).

9. Dispositif selon l'une quelconque des revendications précédentes, **caractérisé en ce que** la face frontale (31, 21) de l'élément de pinçage (30, 20) et/ou la face frontale (61) du moyen de pinçage (6) présente au moins une ouverture (7).

10. Dispositif selon l'une quelconque des revendications précédentes, **caractérisé en ce que** la longueur des faces extérieures (32, 22) de l'élément de pinçage (30, 20) de la mâchoire de pinçage (5) est sensiblement identique.

11. Dispositif selon l'une quelconque des revendications précédentes, **caractérisé en ce que** les éléments de pinçage (30, 20) de la mâchoire de pinçage (5) sont disposés en opposition l'un à l'autre sous un angle sensiblement aigu, qui vaut environ 5° à 50°, de préférence de 10° à 30°.

12. Dispositif selon l'une quelconque des revendications précédentes, **caractérisé en ce que** l'élément de pinçage (30, 20) et/ou le moyen de pinçage (6) de la mâchoire de pinçage (5) est fabriqué au moins partiellement en un matériau métallique et/ou polymère.

13. Dispositif selon l'une quelconque des revendications précédentes, **caractérisé en ce qu'**au moins un élément de fixation (50) est disposé sur la face opposée à la face extérieure (32, 22) de l'élément de pinçage (30, 20).
